(19) 

Europäisches
Patentamt
European
Patent Office
Office européen
des brevets

(11) **EP 4 297 319 A1**

(12) **EUROPEAN PATENT APPLICATION**
published in accordance with Art. 153(4) EPC

(43) Date of publication:
**27.12.2023 Bulletin 2023/52**

(21) Application number: **22766186.5**

(22) Date of filing: **01.03.2022**

(51) International Patent Classification (IPC):
**H04L 5/00** (2006.01)      **H04W 72/04** (2023.01)

(52) Cooperative Patent Classification (CPC):
**H04L 5/00; H04W 72/04**

(86) International application number:
**PCT/CN2022/078570**

(87) International publication number:
**WO 2022/188660 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.03.2021   CN 202110251906
12.04.2021   CN 202110389241**

(71) Applicant: **Huawei Technologies Co., Ltd.
Shenzhen, Guangdong 518129 (CN)**

(72) Inventor: **LI, Qiang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DMRS ORTHOGONALIZATION METHOD, TERMINAL DEVICE, AND NETWORK DEVICE**

(57)      This application provides a DMRS orthogonalization method, a terminal device, and a network device. The method includes: configuring N groups of additional DMRS positions for a first terminal device in a first bandwidth part, where N is a positive integer greater than or equal to 2; and sending first downlink control information DCI to the first terminal device, where the first DCI includes first indication information, the first indication information indicates a first additional DMRS position on which a network device transmits data on a first physical downlink shared channel PDSCH or the first terminal device transmits data on a first physical uplink shared channel PUSCH, and the first additional DMRS position belongs to one of the N groups of additional DMRS positions, or the first additional DMRS position is predefined. In this technical solution, a plurality of groups of DMRS positions are configured for a terminal device in each bandwidth part, to improve a probability of orthogonalization between DMRSs of paired terminal devices.

```
┌──────────────────┐                      ┌──────────────────────┐
│  Network device  │                      │ First terminal device│
└──────────────────┘                      └──────────────────────┘
         │                                           │
┌─────────────────────────┐                          │
│ 310. Configure N groups of                          │
│ additional DMRS positions for a first              │
│ terminal device in a first bandwidth               │
│ part, where N is a positive integer                │
│ greater than or equal to 2                          │
└─────────────────────────┘                          │
         │                                           │
         │    320. First DCI, including first        │
         │─────────indication information──────────▶ │
         │                                           │
         │                          ┌─────────────────────────┐
         │                          │ 330. Perform channel estimation
         │                          │ on first PDSCH based on the first
         │                          │ indication information
         │                          └─────────────────────────┘
         │                                           │
```

FIG. 10

**Description**

This application claims priority to Chinese Patent Application No. 202110251906.0, filed with the China National Intellectual Property Administration on March 8, 2021 and entitled "MULTI-USER MIMO REFERENCE SIGNAL ORTHOGONALIZATION METHOD", and to Chinese Patent Application No. 202110389241.X, filed with the China National Intellectual Property Administration on April 12, 2021 and entitled "DMRS ORTHOGONALIZATION METHOD, TERMINAL DEVICE, AND NETWORK DEVICE", which are incorporated herein by reference in their entireties.

**TECHNICAL FIELD**

This application relates to the communications field, and more specifically, to a DMRS orthogonalization method, a terminal device, and a network device.

**BACKGROUND**

In a multi-user multiple-input multiple-output (multi-user-multi-input-multi-output, MU-MIMO) system, if a channel condition of a terminal device is poor or a moving speed of the terminal device is relatively high, a network device configures an additional demodulation reference signal (additional demodulation reference signal, additional DMRS) for the terminal device, to improve channel estimation quality of the terminal device.

When the network device performs MU-MIMO transmission with a plurality of terminal devices matched based on a matching algorithm, additional DMRS positions of the plurality of terminal devices may not be the same. In this case, even if different antenna ports are used for data transmission, DMRS orthogonalization cannot be implemented. Consequently, interference exists between DMRSs used by the plurality of terminal devices, and channel estimation quality deteriorates.

**SUMMARY**

This application provides a DMRS orthogonalization method, a terminal device, and a network device. In the technical solution, a plurality of groups of DMRS positions are configured for a terminal device in each bandwidth part, to improve a probability of orthogonalization between DMRSs of paired terminal devices.

According to a first aspect, a DMRS orthogonalization method is provided. The method includes: configuring N groups of additional DMRS positions for a first terminal device in a first bandwidth part, where N is a positive integer greater than or equal to 2; and sending first downlink control information DCI to the first terminal device, where the first DCI includes first indication information, the first indication information indicates a first additional DMRS position on which a network device transmits data on a first physical downlink shared channel PDSCH or the first terminal device transmits data on a first physical uplink shared channel PUSCH, and the first additional DMRS position belongs to one of the N groups of additional DMRS positions, or the first additional DMRS position is predefined.

In this embodiment, the first additional DMRS position is predefined, and the predefinition herein may be understood as that the first additional DMRS position is defined in a protocol.

Optionally, N is a positive integer greater than or equal to 1.

Based on this embodiment of this application, the network device may configure a plurality of groups of DMRS positions for the first terminal device in the first bandwidth part, and send DCI to the first terminal device. The DCI may include first indication information. The indication information may indicate the first additional DMRS position on which the network device transmits the data on the PDSCH, or the first additional DMRS position on which the first terminal device transmits the data on the PUSCH. In this technical solution, because the network device configures the plurality of groups of DMRS positions for the terminal device in the bandwidth part, the terminal device may be paired with any terminal device that has one or more of the plurality of groups of DMRS positions, to increase a probability of orthogonalization between DMRSs of the terminal devices during pairing.

With reference to the first aspect, in some implementations of the first aspect, the method further includes the following:

configuring M groups of additional DMRS positions for a second terminal device in the first bandwidth part, where M is a positive integer greater than or equal to 2, and sending second DCI to the second terminal device, where the second DCI includes second indication information. The second indication information indicates a second additional DMRS position on which the network device transmits data on a second PDSCH or the second terminal device transmits data on a second PUSCH, and the second additional DMRS position belongs to one of the M groups of additional DMRS positions, or the second additional DMRS position is predefined. The first additional DMRS position and the second additional DMRS position are in a same orthogonal frequency division multiplexing OFDM symbol.

In this embodiment, the second additional DMRS position may alternatively be predefined, that is, defined in a protocol.

Based on this embodiment of this application, the network device also configures the plurality of groups of DMRS positions for the second terminal device in the first bandwidth part, and sends the second DCI to the second terminal device. The second DCI includes the second indication information that indicates the second additional DMRS position used by the network device or the second terminal device. When the second additional DMRS position and the second additional DMRS position are in a same OFDM symbol, different antenna ports may be selected to ensure that a first additional DMRS is orthogonal to a second additional DMRS, so that channel estimation performed by the terminal device is not affected.

With reference to the first aspect, in some implementations of the first aspect, the first additional DMRS position is a unified configuration for all terminal devices in a cell, and/or the second additional DMRS position is a unified configuration for all terminal devices in a cell.

In this embodiment, one of the plurality of groups of DMRS positions configured by the network device for the terminal device is a unified configuration for all terminal devices in a cell, and other DMRSs may be configured by a higher layer of a system.

Based on this embodiment of this application, the network device may configure one unified additional DMRS position for all terminal devices in a cell, and then indication information of the unified additional DMRS position is included in DCI that is sent to the terminal devices. This facilitates orthogonality of DMRSs of a plurality of paired terminal devices.

With reference to the first aspect, in some implementations of the first aspect, when the first additional DMRS position belongs to one of the N groups of additional DMRS positions, the first additional DMRS position is sent by the network device to the first terminal device through a system message or separate configuration information.

With reference to the first aspect, in some implementations of the first aspect, the first indication information is carried in a field that is of the DCI and that indicates a DMRS antenna port.

Based on this embodiment of this application, the first indication information is carried in the field that is of the DCI and that indicates the DMRS antenna port, so that the field that indicates the DMRS antenna port can be fully used.

Optionally, the DCI may include a newly introduced field, to indicate the first indication information. For example, the DCI includes one new 1-bit field. When the field is set to 0, a group of configuration is indicated. When the field is set to 1, another group of configuration is indicated.

With reference to the first aspect, in some implementations of the first aspect, a first domain in the field that indicates the DMRS antenna port indicates the DMRS antenna port, a second domain in the field that indicates the DMRS antenna port indicates the first additional DMRS position, and an intersection set of the first domain and the second domain is empty.

It should be understood that the intersection set of the first domain and the second domain is empty may be understood as that the first domain and the second domain do not overlap.

For example, the first domain is three bits in the field that indicates the DMRS antenna port, and the second domain is one bit that is other than the first domain and that is in the field that indicates the DMRS antenna port.

According to a second aspect, a DMRS orthogonalization method is provided. The method includes: A third additional DMRS position is configured for a first terminal device in a first bandwidth part. Third downlink control information DCI is sent to the first terminal device, where the third DCI includes third indication information. The third indication information indicates a target additional DMRS position on which a network device transmits data on a third PDSCH or the first terminal device transmits data on a third PUSCH. The target additional DMRS position is the third additional DMRS position, or the target additional DMRS position is predefined.

That the target additional DMRS position is predefined may be understood as that the target additional DMRS position is defined in a protocol. It should be understood that the predefined additional DMRS position may be a unified configuration for all terminal devices in a cell.

Based on this embodiment of this application, the network device configures one group of additional DMRS positions for the terminal device, and another group of additional DMRS positions is predefined in a protocol. The network device may indicate, in the DCI that is sent to the terminal device, that the network device or the terminal device uses the configured third additional DMRS position or the predefined additional DMRS position.

Optionally, the target additional DMRS position belongs to one of a plurality of groups of predefined additional DMRSs.

According to a third aspect, a DMRS orthogonalization method is provided. The method includes: A first terminal device receives first DCI, where the first DCI includes first indication information. The first indication information indicates a first additional DMRS position. The first additional DMRS position belongs to one of N groups of additional DMRS positions. The N groups of additional DMRS positions are configured by a network device for the first terminal device in a first bandwidth part, or the first additional DMRS position is predefined, and N is a positive integer greater than or equal to 2. When the first additional DMRS position is used by the network device to transmit data on a first PDSCH, the first terminal device performs channel estimation on the first PDSCH based on the first indication information, or when the first additional DMRS position is used by the first terminal device to transmit data on a first PUSCH, the first terminal device transmits a first additional DMRS based on the first indication information.

With reference to the third aspect, in some implementations of the third aspect, the method further includes: A second terminal device receives second DCI, where the second DCI includes second indication information. The second indication information indicates a second additional DMRS position. The second additional DMRS position belongs to one of M groups of additional DMRS positions, or the second additional DMRS position is predefined, and M is a positive integer greater than or equal to 2. When the second additional DMRS position is used by the network device to transmit data on a second PDSCH, the second terminal device performs channel estimation on the second PDSCH based on the second indication information, or when the second additional DMRS position is used by the second terminal device to transmit data on a second PUSCH, the second terminal device transmits a second additional DMRS based on the second indication information. The first additional DMRS position and the second additional DMRS position are in a same orthogonal frequency division multiplexing OFDM symbol.

With reference to the third aspect, in some implementations of the third aspect, the first additional DMRS position is a unified configuration for all terminal devices in a cell, and/or the second additional DMRS position is a unified configuration for all terminal devices in a cell.

With reference to the third aspect, in some implementations of the third aspect, when the first additional DMRS position belongs to one of the N groups of additional DMRS positions, the first additional DMRS position is sent by the network device to the first terminal device through a system message or separate configuration information.

With reference to the third aspect, in some implementations of the third aspect, the first indication information is carried in a field that is of the DCI and that indicates a DMRS antenna port.

With reference to the third aspect, in some implementations of the third aspect, a first domain in the field that indicates the DMRS antenna port indicates the DMRS antenna port, a second domain in the field that indicates the DMRS antenna port indicates the first additional DMRS position, and an intersection set of the first domain and the second domain is empty.

According to a fourth aspect, a terminal device is provided, including:

a memory, configured to store instructions; and a processor, configured to read the instructions, where when the instructions are executed by the processor, the terminal device is enabled to perform the following steps.

First DCI is received, where the first DCI includes first indication information. The first indication information indicates a first additional DMRS position. The first additional DMRS position belongs to one of N groups of additional DMRS positions. The N groups of additional DMRS positions are configured by a network device for the terminal device in a first bandwidth part, or the first additional DMRS position is predefined, and N is a positive integer greater than or equal to 2. When the first additional DMRS position is used by the network device to transmit data on a first PDSCH, the terminal device performs channel estimation on the first PDSCH based on the first indication information, or when the first additional DMRS position is used by the terminal device to transmit data on a first PUSCH, the terminal device transmits a first additional DMRS based on the first indication information.

With reference to the fourth aspect, in some implementations of the fourth aspect, the first additional DMRS position and a second additional DMRS position are in a same OFDM symbol. The second additional DMRS position is indicated by second indication information in second DCI received by another terminal device. The second additional DMRS position belongs to one of M groups of additional DMRS positions, or the second additional DMRS position is predefined, and M is a positive integer greater than or equal to 2. When the second additional DMRS position is used by the network device to transmit data on a second PDSCH, the another terminal device performs channel estimation on the second PDSCH based on the second indication information, or when the second additional DMRS position is used by the another terminal device to transmit data on a second PUSCH, the another terminal device transmits a second additional DMRS based on the second indication information.

With reference to the fourth aspect, in some implementations of the fourth aspect, the first additional DMRS position is a unified configuration for all terminal devices in a cell, and/or the second additional DMRS position is a unified configuration for all terminal devices in a cell.

With reference to the fourth aspect, in some implementations of the fourth aspect, when the first additional DMRS position belongs to one of the N groups of additional DMRS positions, the first additional DMRS position is sent by the network device to the terminal device through a system message or separate configuration information.

With reference to the fourth aspect, in some implementations of the fourth aspect, the first indication information is carried in a field that is of the first DCI and that indicates a DMRS antenna port.

With reference to the fourth aspect, in some implementations of the fourth aspect, a first domain in the field that indicates the DMRS antenna port indicates the DMRS antenna port, a second domain in the field that indicates the DMRS antenna port indicates the first additional DMRS position, and an intersection set of the first domain and the second domain is empty.

According to a fifth aspect, a network device is provided, including: a processing unit, for configuring N groups of additional DMRS positions for a first terminal device in a first bandwidth part, where N is a positive integer greater than or equal to 2; and a transceiver unit, configured to send first downlink control information DCI to the first terminal device, where the first DCI includes first indication information, the first indication information indicates a first additional DMRS position on which the network device transmits data on a first physical downlink shared channel PDSCH or the first terminal device transmits data on a first physical uplink shared channel PUSCH, and the first additional DMRS position belongs to one of the N groups of additional DMRS positions, or the first additional DMRS position is predefined.

With reference to the fifth aspect, in some implementations of the fifth aspect, the processing unit is further for configuring M groups of additional DMRS positions for a second terminal device in the first bandwidth part, where M is a positive integer greater than or equal to 2. The transceiver unit is further configured to send second DCI to the second terminal device, where the second DCI includes second indication information, the second indication information indicates a second additional DMRS position on which the network device transmits data on a second PDSCH or the second terminal device transmits data on a second PUSCH, and the second additional DMRS position belongs to one of the N groups of additional DMRS positions, or the second additional DMRS position is predefined. The first additional DMRS position and the second additional DMRS position are in a same orthogonal frequency division multiplexing OFDM symbol.

With reference to the fifth aspect, in some implementations of the fifth aspect, the first additional DMRS position is a unified configuration for all terminal devices in a cell, and/or the second additional DMRS position is a unified configuration for all terminal devices in a cell.

With reference to the fifth aspect, in some implementations of the fifth aspect, when the first additional DMRS position belongs to one of the N groups of additional DMRS positions, the first additional DMRS position is sent by the network device to the first terminal device through a system message or separate configuration information.

With reference to the fifth aspect, in some implementations of the fifth aspect, the first indication information is carried in a field that is of the first DCI and that indicates a DMRS antenna port.

With reference to the fifth aspect, in some implementations of the fifth aspect, a first domain in the field that indicates the DMRS antenna port indicates the DMRS antenna port, a second domain in the field that indicates the DMRS antenna port indicates the first additional DMRS position, and an intersection set of the first domain and the second domain is empty.

According to a sixth aspect, a network device is provided, including a processor. The processor is coupled to a memory. The memory is configured to store a program or instructions. When the program or the instructions are executed by the processor, the network device is enabled to perform the DMRS orthogonalization method in any one of the first aspect, the possible implementations of the first aspect, or the second aspect.

According to a seventh aspect, a computer-readable storage medium is provided. The computer-readable storage medium stores a computer program or instructions. When the computer program or the instructions are executed, a computer is enabled to perform the DMRS orthogonalization method in any one of the first aspect or the possible implementations of the first aspect, the second aspect or the possible implementations of the second aspect, or the third aspect.

According to an eighth aspect, a computer program product is provided. The computer program product includes a computer program (which may also be referred to as code or an instruction). When the computer program is run, a computer is enabled to perform the DMRS orthogonalization method in any one of the first aspect or the possible implementations of the first aspect, the possible implementations of the second aspect, or the third aspect.

According to a ninth aspect, a communication system is provided. The communication system includes at least one terminal device and at least one network device, and is configured to perform the DMRS orthogonalization method in any one of the possible implementations of the first aspect to the third aspect.

## BRIEF DESCRIPTION OF DRAWINGS

FIG. 1 is a schematic diagram of an OFDM time-frequency resource according to an embodiment of this application;
FIG. 2 is a schematic diagram of a MIMO system according to an embodiment of this application;
FIG. 3 is a schematic diagram of implementing DMRS orthogonalization by using different antenna ports according to an embodiment of this application;
FIG. 4 is a schematic diagram of single-user scheduling and multi-user scheduling according to an embodiment of this application;
FIG. 5 is a schematic diagram of an additional DMRS position according to an embodiment of this application;
FIG. 6 is a schematic diagram of DMRS non-orthogonalization according to an embodiment of this application;
FIG. 7A and FIG. 7B are a schematic diagram of pairing of terminal devices that have a same additional DMRS position in a MU-MIMO system according to an embodiment of this application;
FIG. 8 is a schematic diagram of a plurality of groups of additional DMRS positions of a terminal device in a MU-MIMO system according to an embodiment of this application;
FIG. 9 is a schematic diagram of another plurality of groups of additional DMRS positions of a terminal device in a MU-MIMO according to an embodiment of this application;

FIG. 10 is a schematic flowchart of a DMRS orthogonalization method according to an embodiment of this application;

FIG. 11 is a schematic flowchart of another DMRS orthogonalization method according to an embodiment of this application;

FIG. 12 is a schematic block diagram of a terminal device according to an embodiment of this application; and

FIG. 13 is a schematic block diagram of another terminal device according to an embodiment of this application.

## DESCRIPTION OF EMBODIMENTS

The following describes technical solutions of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a 6th generation (6th generation, 6G) system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G and 6G network, a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in the global system for mobile communications (global system for mobile communications, GSM) or the code division multiple access (code division multiple access, CDMA) system, may be a NodeB (NodeB, NB) in the wideband code division multiple access (wideband code division multiple access, WCDMA) system, may be an evolved NodeB (evolved NodeB, eNB or eNodeB) in the LTE system, or may be a radio controller in a cloud radio access network (cloud radio access network, CRAN) scenario. Alternatively, the network device may be a relay station, an access point, a vehicle-mounted device, a wearable device, a network device in the 5G and 6G network, a network device in the future evolved PLMN, or the like. This is not limited in embodiments of this application.

In current 4G and 5G wireless communications systems, an orthogonal frequency division multiplexing (orthogonal frequency division multiplexing, OFDM) signal modulation manner is usually used.

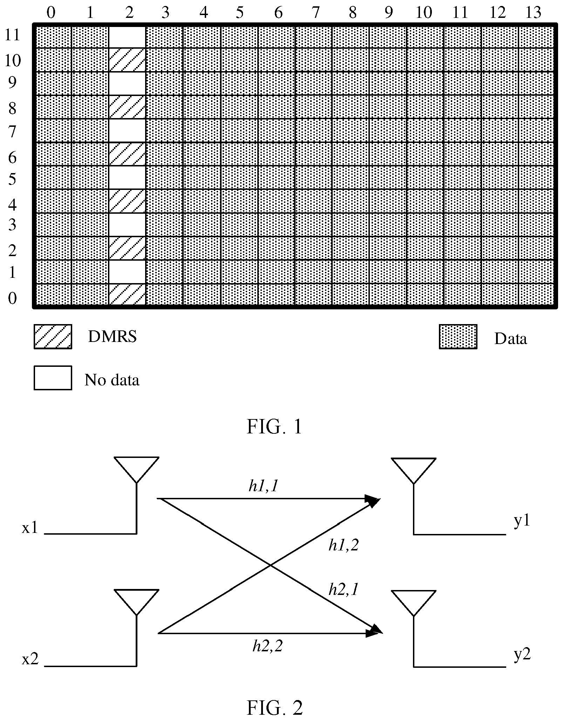

FIG. 1 is a schematic diagram of an OFDM time-frequency resource according to an embodiment of this application.

Refer to FIG. 1. An OFDM time-frequency resource is divided into a plurality of OFDM symbols in a time domain dimension, and each cell represents one OFDM symbol. The OFDM time-frequency resource is divided into a plurality of subcarriers in a frequency domain dimension, and each cell represents one subcarrier. One resource element (resource element, RE) is a time-frequency resource that occupies one OFDM symbol length in time and one subcarrier in frequency. In other words, one cell in FIG. 1 represents one RE, and one modulated (for example, quadrature phase shift keying (quadrature phase shift keying, QPSK), and quadrature amplitude modulation (quadrature amplitude modulation, QAM), for example, 16QAM) symbol may be transmitted on each RE.

In FIG. 1, a number on a horizontal axis represents an index of a symbol in one slot, and a number on a vertical axis represents an index of a subcarrier in one resource block (resource block, RB). In addition, an example in which one slot includes 14 symbols is used for description in these figures. In actual implementation, a quantity of symbols included in one slot may not be 14, for example, may be 12. This case is also applicable to this application.

From a perspective of each RE, a received signal may be considered as a product of a transmitted signal and a channel coefficient. For example, a signal received on one RE may be represented as:

$$y = hx + n \tag{1}$$

where y represents a received signal, x is a signal transmitted on an RE, $h$ is a response coefficient of a wireless channel, and n represents additive noise.

The channel coefficient $h$ is a random variable and varies with a transmission condition. To recover the transmitted signal x from the received signal $y$, the channel coefficient $h$ needs to be estimated, and impact of the channel coefficient on the received signal needs to be canceled. For example, if impact of the additive noise n is ignored, the following calculation method may be used to estimate the transmitted signal:

$$\tilde{x} = \frac{y}{\tilde{h}} \qquad (2)$$

where $\tilde{h}$ is an estimated value of the channel coefficient, and $\tilde{x}$ is an estimation of the transmitted signal.

A process of estimating the channel response coefficient $h$ is referred to as channel estimation. To perform channel estimation, a known signal needs to be sent on some REs that are agreed by a transmit end and a receive end, and is referred to as a demodulation reference signal (demodulation reference signal, DMRS). In this way, the channel coefficient can be estimated by using the received signal and the transmitted signal. For example, the REs that are used to transmit the DMRS in FIG. 1 are used to transmit some signals that are agreed upon in advance by the transmit end and the receive end. In this case, an expression of the received signal is as follows:

$$y = hx_{rs} + n \qquad (3)$$

where y is the received signal, $x_{rs}$ is the DMRS (known to both the transmit end and the receive end), $h$ is the response coefficient of the wireless channel, and $n$ represents the additive noise. In this way, the receive end may estimate the channel response coefficient, for example, by using a simple algorithm as follows:

$$\tilde{h} = \frac{y}{x_{rs}} \qquad (4)$$

With introduction of a multi-antenna technology to a wireless communications system, a transmit end may transmit multi-stream data on a same time-frequency resource, to improve a system capacity. The multi-antenna technology means that the transmit end, the receive end, or both use a plurality of antennas. In this case, multi-stream data can be transmitted on a same time-frequency resource, and all the multi-stream data can be recovered at the receive end.

FIG. 2 is a schematic diagram of a MIMO system according to an embodiment of this application.

Refer to FIG. 2. The MIMO system has two transmit ends and two receive ends. It is assumed that a transmit end has two transmit antennas, and two signal symbols $x_1$ and $x_2$ are simultaneously sent on a same RE, and a receive end also has two antennas. In this case, an expression of a received signal may be expressed as:

$$\begin{bmatrix} y_1 \\ y_2 \end{bmatrix} = \begin{bmatrix} h_{1,1} & h_{1,2} \\ h_{2,1} & h_{2,2} \end{bmatrix} \begin{bmatrix} x_1 \\ x_2 \end{bmatrix} + \begin{bmatrix} n_1 \\ n_2 \end{bmatrix} \qquad (5)$$

where $y_1$ and $y_2$ respectively represent signals received on two receive antennas, and $h_{i,j}$ represents a wireless channel coefficient between a receive antenna i and a transmit antenna j. Similar to a single-antenna system, to estimate the transmitted signals $x_1$ and $x_2$, the channel coefficient also needs to be estimated first. Here, a channel coefficient matrix needs to be estimated, namely $\begin{bmatrix} h_{1,1} & h_{1,2} \\ h_{2,1} & h_{2,2} \end{bmatrix}$ .

To perform channel estimation for a multi-antenna system, a transmit end needs to send a DMRS that is known to both a receive end and the transmit end. It should be noted that, to help the receive end estimate channel response coefficients one by one, a plurality of transmit antennas need to send the DMRS on different resources.

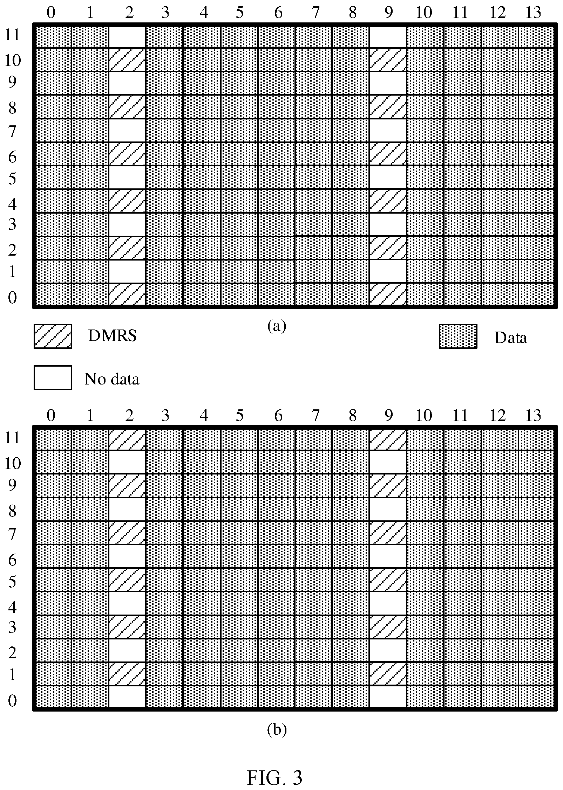

FIG. 3 is a schematic diagram of implementing DMRS orthogonalization by using different antenna ports according to an embodiment of this application.

(a) in FIG. 3 is a signal sent by an antenna 1. On an OFDM symbol 2 and an OFDM symbol 9, a DMRS is sent on REs whose subcarrier numbers are 0, 2, 4, 6, 8, and 10, and no data is sent on REs whose subcarrier numbers are 1, 3, 5, 7, 9, and 11, but data is sent on other OFDM symbols.

(b) in FIG. 3 is a signal sent by an antenna 2. On an OFDM symbol 2 and an OFDM symbol 9, no data is sent on REs whose subcarrier numbers are 0, 2, 4, 6, 8, and 10, a DMRS is sent on REs whose subcarrier numbers are 1, 3, 5, 7, 9, and 11, but data is sent on other OFDM symbols.

It can be learned from the foregoing descriptions that, in the signals sent by the antenna 1 and the antenna 2, OFDM symbols in which the DMRS is located are the same. In the signal sent by the antenna 1, no data is sent at an RE position corresponding to the DMRS sent by the antenna 2, and in the signal sent by the antenna 2, no data is sent at an RE position corresponding to the DMRS sent by the antenna 1. In this way, the DMRSs sent by the antenna 1 and the antenna 2 do not cause mutual interference, which is referred to as orthogonalization of the DMRSs sent by the antenna 1 and the antenna 2. In this way, a receive end may separately estimate channel coefficients corresponding to the two antennas, without causing interference. A time-frequency-code domain resource used by the DMRS is referred to as an antenna port of the DMRS, and orthogonality of the DMRS can be ensured by using different antenna ports. For example, in FIG. 3, the antenna 1 and the antenna 2 use different antenna ports to send the DMRS.

In a wireless communications system, to improve a system capacity, a MU-MIMO technology may be used to schedule multiple user equipment on a same time-frequency resource.

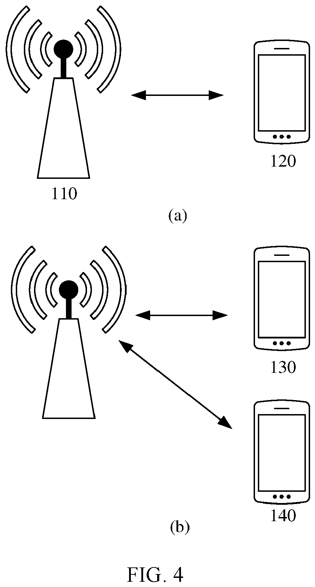

FIG. 4 is a schematic diagram of single-user scheduling and multi-user scheduling according to an embodiment of this application.

(a) in FIG. 4 shows the single-user scheduling, to be specific, a base station schedules only one user on one time-frequency resource. (b) in FIG. 4 shows the multi-user scheduling, to be specific, a base station may schedule a plurality of users, for example, two or more users, on one time-frequency resource.

As shown in (b) in FIG. 4, a network device 110 may send data to a terminal device 130 on an antenna port 1, and send data to a terminal device 140 on an antenna port 2. This process may be represented by the following expression:

$$\begin{bmatrix} y_1 \\ y_2 \end{bmatrix} = \begin{bmatrix} h_{1,1} & h_{1,2} \\ h_{2,1} & h_{2,2} \end{bmatrix} \begin{bmatrix} x_1 \\ x_2 \end{bmatrix} + \begin{bmatrix} n_1 \\ n_2 \end{bmatrix} \tag{6}$$

For the terminal device 130, an expression for receiving a signal by the terminal device 130 is:

$$y_1 = h_{1,1}x_1 + h_{1,2}x_2 + n_1 \tag{7}$$

$h_{1,1}x_1$ is a signal part actually sent to the terminal device 130, $h_{1,2}x_2$ is an interference part, and $n_1$ is an additive noise part, and to receive the signal correctly, the terminal device 130 needs to estimate $h_{1,1}$.

Similarly, for the terminal device 140, an expression for receiving a signal by the terminal device 140 is:

$$y_2 = h_{2,2}x_2 + h_{2,1}x_1 + n_2 \tag{8}$$

$h_{2,2}x_2$ is a signal part actually sent to the terminal device 130, $h_{2,1}x_1$ is an interference part, and $n_2$ is an additive noise part, and to receive the signal correctly, the terminal device 130 needs to estimate $h_{2,2}$.

To help the terminal device 130 and the terminal device 140 separately perform channel estimation, DMRSs of the two antenna ports need to be orthogonalized. Orthogonalization of different antenna ports can avoid interference between DMRSs.

In this case, the network device indicates, in downlink control information (downlink control information, DCI), specific antenna ports used by DMRSs of different terminal devices to different terminal devices. For example, a DMRS of the terminal device 130 uses an antenna port 0, and a DMRS of the terminal device 140 uses the antenna port 1, so that interference between DMRSs of the two terminal devices can be avoided.

It should be noted that selection of paired terminal devices has great impact on system performance. For example, after two terminals are paired, data transmitted to a terminal device 1 also arrives at a terminal device 2 at the same time, and interference is caused to reception of the terminal device 2. Therefore, a network device needs to select terminal devices with a low mutual interference level for pairing.

After using the MU-MIMO technology, the network device pairs terminal devices that use MU-MIMO transmission, but positions of additional DMRSs (additional DMRSs) of the paired terminal devices are not necessarily the same.

In each slot, from aspect of time, the 1st DMRS is referred to as a front-loaded DMRS (front-loaded DMRS). In addition to the front-loaded DMRS, after the network device establishes a connection to the terminal device, if a condition of a channel on which the terminal device is located is poor, or the terminal device has a high moving speed (for example, the terminal device is in a high-speed vehicle), the network device may configure an additional DMRS for the terminal device, to improve quality of channel estimation performed by the terminal device.

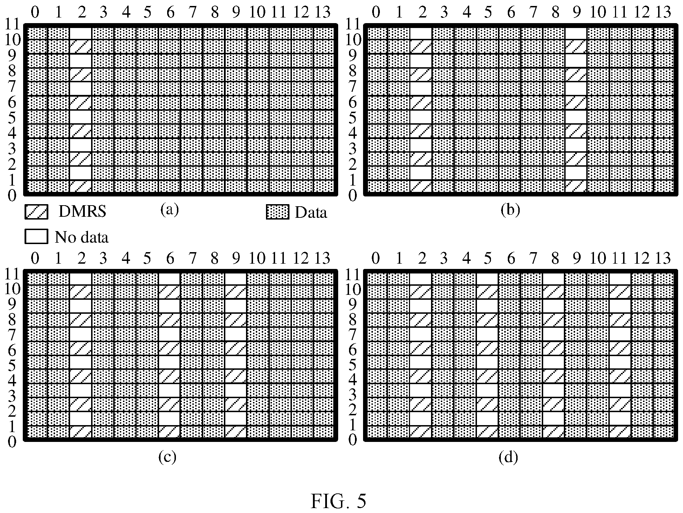

FIG. 5 is a schematic diagram of an additional DMRS position according to an embodiment of this application.

As shown in FIG. 5, there may be zero to three OFDM symbols configured by a network device for transmitting an additional DMRS. These configurations are represented by "pos0" to "pos3".

As shown in (a) in FIG. 5, a configuration of an OFDM symbol for sending a DMRS may be represented by "pos0", in other words, there is only one front-loaded DMRS and no additional DMRS.

As shown in (b) in FIG. 5, a configuration of an OFDM symbol for sending a DMRS may be represented by "pos1", in other words, there are one front-loaded DMRS and one additional DMRS, and the additional DMRS is located in an OFDM symbol 9.

As shown in (c) in FIG. 5, a configuration of an OFDM symbol for sending a DMRS may be represented by "pos2", in other words, there are one front-loaded DMRS and two additional DMRSs, and the two additional DMRSs are respectively located in an OFDM symbol 6 and an OFDM symbol 9.

As shown in (d) in FIG. 5, a configuration of an OFDM symbol for sending a DMRS may be represented by "pos3", in other words, there are one front-loaded DMRS and three additional DMRSs, and the three additional DMRSs are respectively located in an OFDM symbol 5, an OFDM symbol 8, and an OFDM symbol 11.

It can be learned that when quantities of additional DMRSs are different, the additional DMRSs are located in different OFDM symbols.

It should be noted that this configuration is a higher-layer semi-static configuration process, and cannot be flexibly changed with each scheduling. However, an antenna port may be dynamically selected, and may be indicated in DCI sent by the network device.

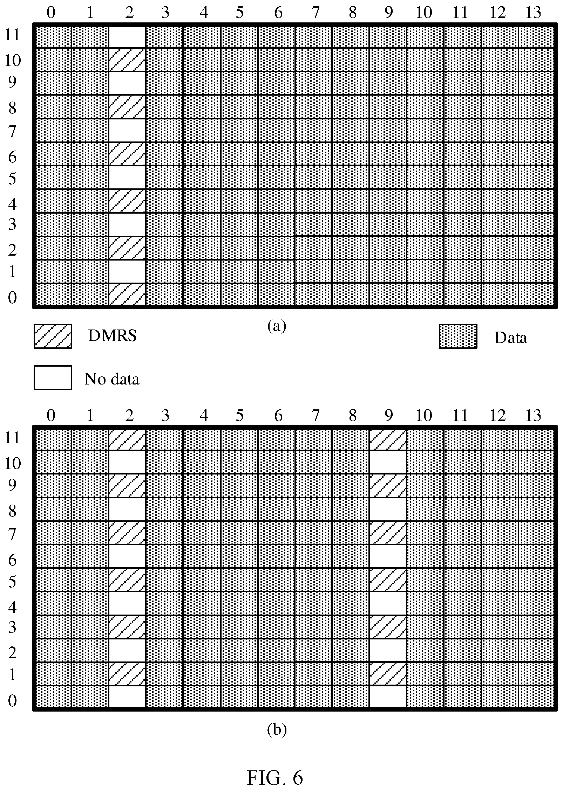

FIG. 6 is a schematic diagram of DMRS non-orthogonalization according to an embodiment of this application.

(a) and (b) in FIG. 6 respectively represent distributions of DMRSs of two terminal devices that perform MU-MIMO transmission.

For example, a network device finds, based on a pairing algorithm, that a terminal device 1 and a terminal device 2 are suitable for pairing for MU-MIMO transmission. However, in this case, there is no additional DMRS in a DMRS of the terminal device 1 (as shown in (a) in FIG. 6), and an additional DMRS position in a DMRS of the terminal device 2 is in an OFDM symbol 9. In this case, even if different antenna ports are used, orthogonalization between the DMRS of the terminal device 1 and the DMRS of the terminal device 2 cannot be implemented. It can be learned from FIG. 6 that, for front-loaded DMRSs, both the front-loaded DMRSs are located in an OFDM symbol 2. In this case, it can be ensured that the front-loaded DMRSs are orthogonal by using different antenna ports. However, for the additional DMRS, the additional DMRS position of the terminal device 2 is in the OFDM symbol 9, and data, rather than a DMRS, is transmitted in an OFDM symbol 9 of the terminal device 1. Therefore, the additional DMRS of the terminal device 2 and a data part of the terminal device 1 use a same resource. The additional DMRS of the terminal device 2 and the data part of the terminal device 1 are not orthogonal. This causes mutual interference.

In this case, for a problem that DMRSs of paired terminal devices are not orthogonal, in one solution, in a MU-MIMO transmission process, even if additional DMRS positions of the paired terminal devices are different, in other words, there is a collision between data and a DMRS, MU-MIMO transmission is still performed. In this case, the paired terminal devices perform channel estimation and data receiving and sending based on normal steps, but channel estimation quality deteriorates. For example, in FIG. 6(a), there is no additional DMRS in the DMRS of the terminal device 1, and the additional DMRS position in the DMRS of the terminal device 2 is in the OFDM symbol 9, but MU-MIMO transmission is still performed. In this way, the additional DMRS position (the OFDM symbol 9) of the terminal device 2 is interfered by a data signal of the terminal device 1, and channel estimation performance deteriorates.

Another solution is that pairing may be performed only between terminal devices that have a same additional DMRS position.

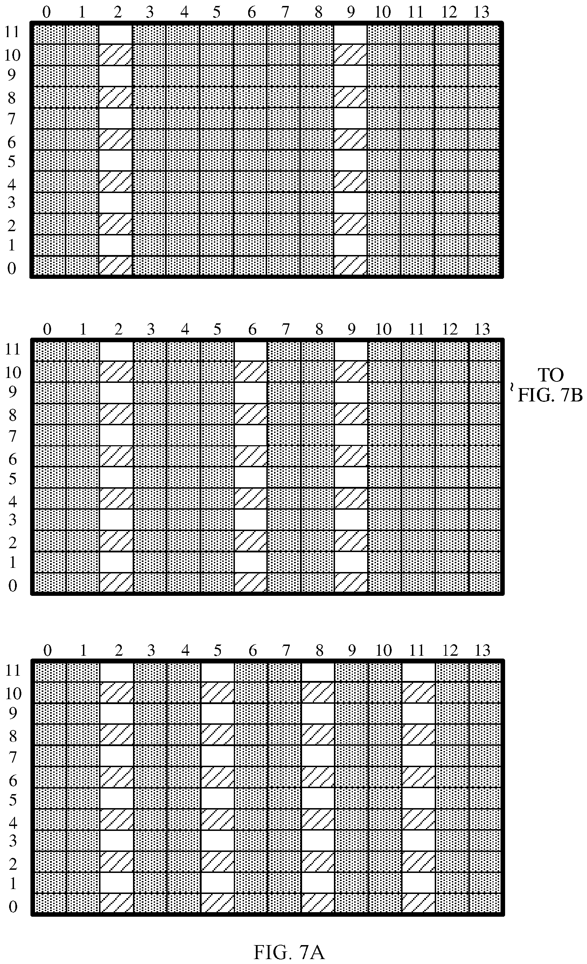

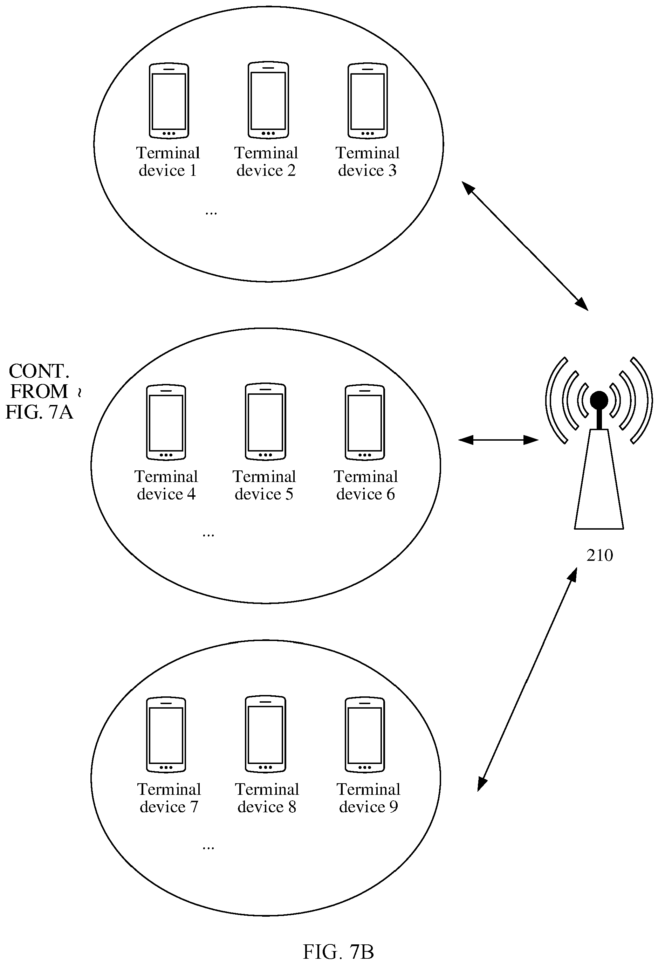

FIG. 7A and FIG. 7B are a schematic diagram of pairing of terminal devices that have a same additional DMRS position in a MU-MIMO system according to an embodiment of this application.

Refer to FIG. 7A and FIG. 7B. In one cell, a network device 210 may separately perform additional DMRS configuration based on a channel condition of each terminal device. For example, a terminal device 1, a terminal device 2, and a terminal device 3 use a same configuration, in other words, additional DMRS positions are in an OFDM symbol 9. A terminal device 4, a terminal device 5, and a terminal device 6 use a same configuration, in other words, additional DMRS positions are in an OFDM symbol 6 and an OFDM symbol 9. A terminal device 7, a terminal device 8, and a terminal device 9 use a same configuration, in other words, additional DMRS positions are in an OFDM symbol 5, an OFDM symbol 8, and an OFDM symbol 11. In this case, when performing MU-MIMO pairing on terminal devices, a network device performs pairing only on terminal devices that have a same additional DMRS position, for example, performs pairing between the terminal device 1, the terminal device 2, and the terminal device 3, but does not perform pairing between the terminal device 1 and a terminal device other than the terminal device 2 and the terminal device 3.

In this case, the terminal devices can be paired only in a small range. In this case, a combination of terminal devices that can be selected by the network device is very limited. A pairing effect of the pairing is lower than a pairing effect of pairing between all terminal devices in a cell.

For example, based on an actual channel condition of the terminal device, the terminal device 1 and the terminal device 5 are originally an optimal pairing combination for MU-MIMO transmission. But additional DMRS positions of the terminal device 1 and the terminal device 5 are different, the terminal device 1 and the terminal device 5 cannot be paired. Consequently, the terminal device 1 can be paired only with the terminal device 2 or the terminal device 3, and a performance advantage of MU-MIMO cannot be fully reflected.

In view of this, embodiments of this application provide a DMRS orthogonalization method. A plurality of groups of additional DMRS positions are configured for a terminal device in a bandwidth part, so that the terminal device can be paired with any terminal device that has one or more groups of additional DMRS positions in the plurality of groups of additional DMRS positions. In this way, a probability of orthogonalization between DMRSs of the terminal devices during pairing can be increased, and a combination range of paired terminal devices can be increased, so that the performance advantage of MU-MIMO is better reflected.

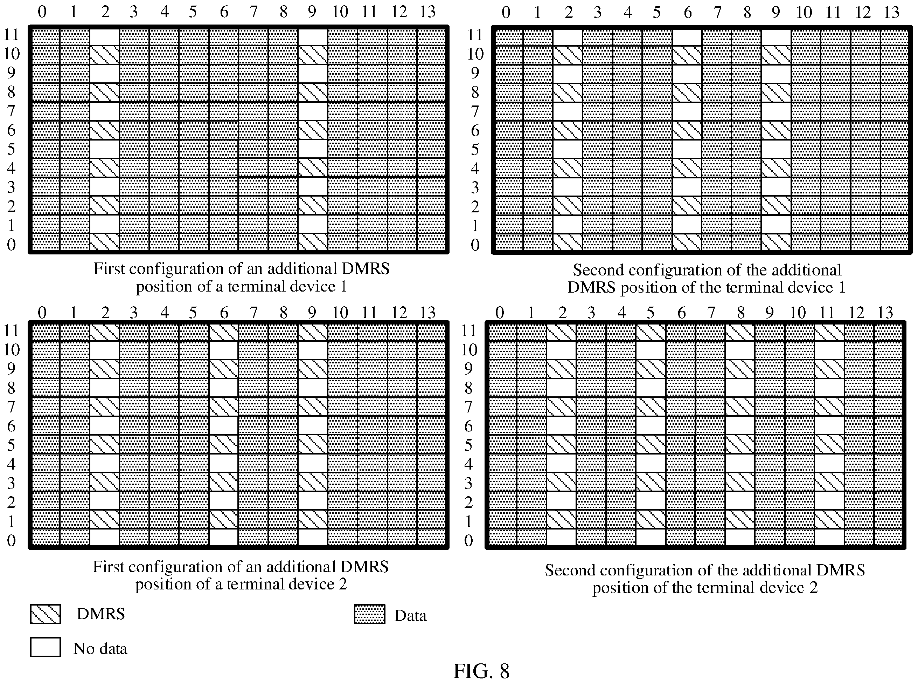

FIG. 8 is a schematic diagram of a plurality of groups of additional DMRS positions of a terminal device in a MU-MIMO system according to an embodiment of this application.

As shown in FIG. 8, a network device configures two groups of additional DMRS positions for a terminal device 1. An additional DMRS of a first group of configuration is located in an OFDM symbol 9, and an additional DMRS of a second group of configuration is located in an OFDM symbol 6 and an OFDM symbol 9.

When the terminal device 1 has two additional DMRS position configurations and the network device performs MU-MIMO pairing, the terminal device 1 may pair with a terminal device that has an additional DMRS position of the first configuration, and may also pair with a terminal device that has an additional DMRS position of the second configuration. This increases a pairing selection range of the terminal device 1, and also increases a probability that DMRSs of the terminal devices are orthogonal during pairing, so that a performance advantage of MU-MIMO can be further reflected.

Similarly, the network device configures two groups of additional DMRS positions for a terminal device 2. An additional DMRS of a first group of configuration is located in an OFDM symbol 6 and an OFDM symbol 9, and an additional DMRS of a second group of configuration is located in an OFDM symbol 5, an OFDM symbol 8 and an OFDM symbol 11.

Similarly, when the terminal device 2 has two additional DMRS position configurations and the network device performs MU-MIMO pairing, the terminal device 2 may pair with a terminal device that has an additional DMRS position of the first configuration, and may also pair with a terminal device that has an additional DMRS position of the second configuration. This increases a pairing selection range of the terminal device 2, and also increases a probability that DMRSs of the terminal devices are orthogonal during pairing, so that a performance advantage of MU-MIMO can be further reflected.

For example, the terminal device 1 and the terminal device 2 are paired. The network device may indicate, in DCI sent to the terminal device, an additional DMRS position on which the network device transmits data on a physical downlink shared channel (physical downlink shared channel, PDSCH), or the network device may indicate, in the DCI, an additional DMRS position on which the terminal device transmits data on a physical uplink shared channel (physical uplink shared channel, PUSCH).

For example, the network device indicates, in DCI sent to the terminal device 1, that the additional DMRS position on which the network device transmits the data on the PDSCH uses the second group of configuration, and indicates, in DCI sent to the terminal device 2, that the additional DMRS position on which the network device transmits the data on the PUSCH uses the first group of configuration. In this case, the additional DMRS position of the terminal device 1 and the additional DMRS position of the terminal device 2 are in a same OFDM symbol. Based on this, different antenna ports are selected for the DCI sent to the terminal device 1 and the terminal device 2, so that DMRSs of the terminal device 1 and the terminal device 2 are orthogonal, and mutual interference is not caused.

It should be understood that, in this embodiment of this application, an example in which the network device configures two groups of additional DMRS positions for the terminal device is used for description. In some examples, the network device may alternatively configure three or four groups of additional DMRS positions for the terminal device. This is not limited in this embodiment of this application.

Based on this embodiment of this application, the network device configures a plurality of groups of additional DMRS positions for the terminal device in the bandwidth part. In this technical solution, a probability that DMRSs of terminal devices are orthogonal during pairing can be increased, and a combination range of paired terminal devices can be increased. Further, the network device may indicate, in the DCI, additional DMRS positions that are used by paired terminal devices, to ensure that DMRSs of the paired terminal devices are orthogonal.

EP 4 297 319 A1

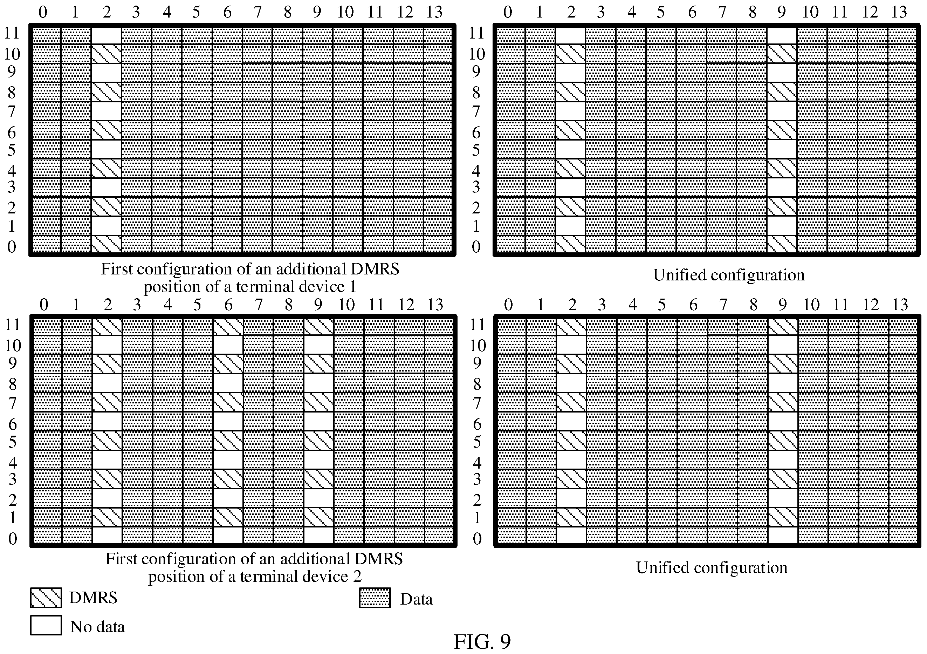

FIG. 9 is a schematic diagram of another plurality of groups of additional DMRS positions of a terminal device in a MU-MIMO according to an embodiment of this application.

As shown in FIG. 9, in a possible case, a network device configures two groups of additional DMRS positions for a terminal device 1. No additional DMRS position is configured in a first group of configuration. An additional DMRS of a second group of configuration is located in an OFDM symbol 9, where an additional DMRS position of the second group of configuration may be a unified configuration for all terminal devices in a cell.

In another possible case, the network device configures the first configuration for the terminal device 1, and the second configuration is predefined, for example, defined in a protocol.

Similarly, in a possible implementation, the network device configures two groups of additional DMRS positions for a terminal device 2. An additional DMRS of a first group of configuration is located in an OFDM symbol 6 and an OFDM symbol 9. An additional DMRS of a second group of configuration is located in an OFDM symbol 9, where an additional DMRS position of the second group of configuration is a unified configuration for all terminal devices in a cell.

In another possible implementation, the network device configures the first configuration for the terminal device 2, and the second configuration is predefined, for example, defined in a protocol.

For example, the terminal device 1 and the terminal device 2 are paired. The network device may indicate, in DCI sent to the terminal device, an additional DMRS position on which the network device transmits data on a PDSCH, or the network device may indicate, in the DCI, an additional DMRS position on which the terminal device transmits data on a PUSCH.

For example, the network device indicates, in DCI sent to the terminal device 1, that the additional DMRS position on which the network device transmits the data on the PDSCH uses the unified configuration, and indicates, in DCI sent to the terminal device 2, that the additional DMRS position on which the network device transmits the data on the PDSCH uses the unified configuration. In this case, the additional DMRS position of the terminal device 1 and the additional DMRS position of the terminal device 2 are in a same OFDM symbol. Based on this, different antenna ports are selected for the DCI sent to the terminal device 1 and the terminal device 2, so that DMRSs of the terminal device 1 and the terminal device 2 are orthogonal, and mutual interference is not caused. For example, the terminal device 1 and the terminal device 2 are located in a same cell.

It should be understood that, in this embodiment of this application, an example in which the network device configures two groups of additional DMRS positions for the terminal device is used for description. In some examples, the network device may alternatively configure three or four groups of additional DMRS positions for the terminal device. This is not limited in this embodiment of this application.

Optionally, when a plurality of groups of additional DMRSs of the terminal device are all configured by the network device, the network device may send a uniformly configured additional DMRS position to the terminal device through a system message or separate configuration information.

For example, the system message may be a system information block (system information block, SIB), for example, a SIB 1 or a SIB 2, and the network device may notify, through a broadcast message, all terminal devices in the cell of a first additional DMRS position.

For example, the separate configuration information may be DMRS-downlink configuration information (DMRS-downlink config). The network device notifies the terminal device of the first additional DMRS position by sending the DMRS-downlink configuration information.

Based on this embodiment of this application, the network device configures a plurality of groups of additional DMRS positions for the terminal device in the bandwidth part. In this technical solution, a probability that DMRSs of terminal devices are orthogonal during pairing can be increased, and a combination range of paired terminal devices can be increased. Further, the network device may indicate, in the DCI, additional DMRS positions that are used by paired terminal devices, to ensure that DMRSs of the paired terminal devices are orthogonal.

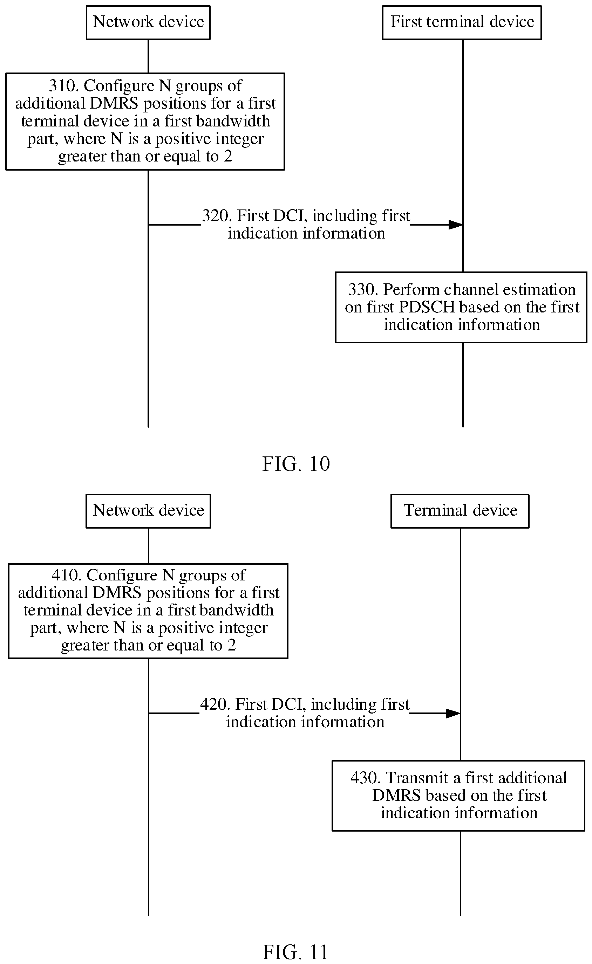

FIG. 10 is a schematic flowchart of a DMRS orthogonalization method according to an embodiment of this application. As shown in FIG. 10, the method may include step 310 to step 330.

310. Configure N groups of additional DMRS positions for a first terminal device in a first bandwidth part, where N is a positive integer greater than or equal to 2.

For example, with reference to FIG. 8 or FIG. 9, a network device configures two groups of additional DMRS positions for the first terminal device in the first bandwidth part.

The network device classifies an operating bandwidth of a system into a plurality of bandwidth parts (bandwidth parts, BWPs). The bandwidth part is a combination of a plurality of consecutive RBs in one carrier. The terminal device may perform corresponding operations such as access and data transmission in this part of bandwidth configured by the system.

Optionally, N may alternatively be a positive integer greater than or equal to 1.

320. Send first downlink control information DCI to the first terminal device, where the first DCI includes first indication information, the first indication information indicates a first additional DMRS position on which the network device transmits data on a first physical downlink shared channel PDSCH, and the first additional DMRS position belongs

11

to one of the N groups of additional DMRS positions, or the first additional DMRS position is predefined.

The network device may indicate, in scheduling signaling DCI, the first additional DMRS position used by the network device to transmit the data on the first PDSCH.

That the first additional DMRS position is predefined may be understood as that the first additional DMRS is defined in a protocol. When the first additional DMRS is defined in the protocol, the terminal device and the network device may learn of the first additional DMRS position without sending messages to each other.

Optionally, the first additional DMRS position is a unified configuration for all terminal devices in a cell.

In this embodiment of this application, the network device may configure, in the bandwidth part, one unified additional DMRS position for all terminal devices in the cell. In this way, when the network device pairs the terminal devices, the network device can indicate, in the DCI, that the additional DMRS position used by the network device to transmit the data on the PDSCH is a unified configuration. This facilitates orthogonality of DMRSs of the paired terminal devices.

Optionally, when the first additional DMRS position belongs to one of the N groups of additional DMRS positions, the first additional DMRS position is sent by the network device to the first terminal device through a system message or separate configuration information.

For example, with reference to FIG. 9, the first additional DMRS position is a unified configuration for all terminal devices in the cell, so that the network device may send the information to the terminal device in the cell through the system message or the separate configuration information.

For example, the system message may be a SIB, for example, a SIB 1 or a SIB 2. The network device may notify, through a broadcast message, all terminal devices in the cell of the first additional DMRS position.

For example, the separate configuration information may be DMRS-downlink configuration information. The network device notifies the terminal device of the first additional DMRS position by sending the DMRS-downlink configuration information.

Optionally, the first indication information is carried in a field that is of the first DCI and that indicates a DMRS antenna port. Therefore, the field that indicates the DMRS antenna port can be fully used.

Table 1 shows an example of information that is in DCI and that indicates an antenna port in a usual case. An index value (value) column may represent information carried in the DCI. This is a 4-bit (bit) field. Therefore, 16 states may be represented, and a DMRS antenna port (port) column is a used antenna port indicated by the information.

**Table 1**

| Index value (value) | Quantity of DMRS code division multiplexing (code division multiplexing, CDM) groups without data | DMRS antenna port (port) |
|---|---|---|
| 0 (0000) | 1 | 0 |
| 1 (0001) | 1 | 1 |
| 2 (0010) | 1 | 0, 1 |
| 3 (0011) | 2 | 0 |
| 4 (0100) | 2 | 1 |
| 5 (0101) | 2 | 2 |
| 6 (0110) | 2 | 3 |
| 7 (0111) | 2 | 0, 1 |
| 8 (1000) | 2 | 2, 3 |
| 9 (1001) | 2 | 0-2 |
| 10 (1010) | 2 | 0-3 |
| 11 (1011) | 2 | 0, 2 |
| 12-15 | Reserved (Reserved) | Reserved |

For example, when four bits of the field that is in the DCI and that indicates the antenna port are "0000", it indicates that the index value is 0, and it indicates that an antenna port 0 is to be used in PDSCH/PUSCH transmission. When four bits of the field of the antenna port in the DCI are "0001 ", it indicates that the index value is 1, and it indicates that an antenna port 1 is to be used in transmission.

It should be noted that, when four bits of the field of the antenna port in the DCI are "0010", it indicates that the index value is 2, and it indicates that both the antenna port 0 and the antenna port 1 are to be used in transmission, that is, the foregoing MIMO mode. However, if one terminal device does not have a plurality of receive antennas, this mode is not used.

When a quantity of antenna ports supported by the terminal device is less than a quantity of antenna ports that can be supported by antenna port indication information in the DCI, Table 2 shows an example of information that is in DCI and that indicates an antenna port in this embodiment of this application.

**Table 2**

| Index value (value) | Quantity of DMRS CDM groups without data | DMRS antenna port (ports) |
|---|---|---|
| 0 (0000) | 1 | 0 and use a first group of additional DMRS positions |
| 1 (0001) | 1 | 0 and use a second group of additional DMRS positions |
| 2 (0010) | 1 | 1 and use a first group of additional DMRS positions |
| 3 (0011) | 1 | 1 and use a second group of additional DMRS positions |
| 4 (0100) | 2 | 0 and use a first group of additional DMRS positions |
| 5 (0101) | 2 | 0 and use a second group of additional DMRS positions |
| 6 (0110) | 2 | 1 and use a first group of additional DMRS positions |
| 7 (0111) | 2 | 1 and use a second group of additional DMRS positions |
| 8 (1000) | 2 | 2 and use a first group of additional DMRS positions |
| 9 (1001) | 2 | 2 and use a second group of additional DMRS positions |
| 10 (1010) | 2 | 3 and use a first group of additional DMRS positions |
| 11 (1011) | 2 | 3 and use a second group of additional DMRS positions |
| 12-15 | Reserved (Reserved) | Reserved |

It can be learned that in this embodiment of this application, the indication information that indicates the additional DMRS position may be carried in the field of the DMRS antenna port. As shown in Table 2, the first row indicates that the antenna port 0 is used and the first group of additional DMRS positions is used, and the second row indicates that the antenna port 0 is used and the second group of additional DMRS positions is used.

Table 3 shows an example of information that is in DCI and that indicates an antenna port in this embodiment of this application.

**Table 3**

| Index value (value) | Quantity of DMRS CDM groups without data | DMRS antenna port (ports) |
|---|---|---|
| 0 (0000) | 1 | 0 and use a configured additional DMRS position |
| 1 (0001) | 1 | 0 and use a unified additional DMRS position |
| 2 (0010) | 1 | 1 and use a configured additional DMRS position |
| 3 (0011) | 1 | 1 and use a unified additional DMRS position |
| 4 (0100) | 2 | 0 and use a configured additional DMRS position |
| 5 (0101) | 2 | 0 and use a unified additional DMRS position |

(continued)

| Index value (value) | Quantity of DMRS CDM groups without data | DMRS antenna port (ports) |
|---|---|---|
| 6 (0110) | 2 | 1 and use a configured additional DMRS position |
| 7 (0111) | 2 | 1 and use a unified additional DMRS position |
| 8 (1000) | 2 | 2 and use a configured additional DMRS position |
| 9 (1001) | 2 | 2 and use a unified additional DMRS position |
| 10 (1010) | 2 | 3 and use a configured additional DMRS position |
| 11 (1011) | 2 | 3 and use a unified additional DMRS position |
| 12-15 | Reserved (Reserved) | Reserved |

Refer to Table 3. The first row indicates that the antenna port 0 is used and the configured additional DMRS position is used. The configured additional DMRS position herein is an additional DMRS position configured by a higher layer of the network device, for example, the first configuration of the additional DMSR position of the terminal device 2 in FIG. 9. The second row indicates that the antenna port 0 is used and the unified additional DMRS position is used. The unified additional DMRS herein is a unified configuration for all terminal devices in a cell, for example, the unified configuration for the terminal device in FIG. 9.

Alternatively, one independent new field may be used in the DCI to indicate the additional DMRS position. For example, based on Table 1, one new 1-bit field is introduced to the DCI. To be specific, the original 4-bit field indicates the antenna port, and the newly introduced 1-bit field indicates the additional DMRS position. For example, when the new field is set to 0, one group of configuration is indicated, or when the field is set to 1, another group of configuration is indicated.

Optionally, a first domain in the field that indicates the DMRS antenna port indicates the DMRS antenna port, a second domain in the field that indicates the DMRS antenna port indicates the first additional DMRS position, and an intersection set of the first domain and the second domain is empty.

It should be understood that the intersection set of the first domain and the second domain is empty may be understood as that the first domain and the second domain do not overlap. For example, the first domain is three bits in the field that indicates the DMRS antenna port, and the second domain is one bit that is other than the first domain and that is in the field that indicates the DMRS antenna port.

Table 4 shows the information that is of the DCI and that indicates the DMRS antenna port in this embodiment of this application.

**Table 4**

| Index value (value) | Quantity of DMRS CDM groups without data | DMRS antenna port (ports) |
|---|---|---|
| 0 (000) | 1 | 0 |
| 1 (001) | 1 | 1 |
| 2 (010) | 2 | 0 |
| 3 (011) | 2 | 1 |
| 4 (100) | 2 | 2 |
| 5 (101) | 2 | 3 |
| 6-7 | Reserved (Reserved) | Reserved |

Table 6 and Table 5 show information that is of the DCI and that indicates the additional DMRS position in this embodiment of this application.

**Table 5**

| Index value (value) | Additional DMRS position (additional DMRS position) |
|---|---|
| 0 | Use a first group of additional DMRS positions |
| 1 | Use a second group of additional DMRS positions |

**Table 6**

| Index value (value) | Additional DMRS position (additional DMRS position) |
|---|---|
| 0 | Use a configured additional DMRS position |
| 1 | Use a unified additional DMRS position |

Refer to Table 4 to Table 6. Three bits in the field that indicates the DMRS antenna port may indicate an antenna port, and remaining one bit indicates the additional DMRS position. In this way, a total quantity of bits used by the field that indicates the DMRS antenna port is still 4, but the antenna port and the additional DMRS position may be indicated simultaneously.

330. The first terminal device performs channel estimation on the first PDSCH based on the first indication information.

The first terminal device may learn of, based on the first indication information in the DCI, the first additional DMRS position on which the network device transmits the data on the first PDSCH, so that the channel estimation can be performed on the first PDSCH, to recover the signal sent by the network device.

Optionally, the method may further include step 340 and step 350.

340. Configure M groups of additional DMRS positions for a second terminal device in the first bandwidth part, where M is a positive integer greater than or equal to 2.

For example, with reference to FIG. 8 or FIG. 9, the network device configures two groups of additional DMRS positions for the second terminal device in the first bandwidth part.

Optionally, M is a positive integer greater than or equal to 1.

It should be understood that M and N may be the same, or may be different.

It should be further understood that step 340 and step 310 may be performed simultaneously, or may be performed separately. This is not limited in this embodiment of this application.

350. Send second DCI to the second terminal device, where the second DCI includes second indication information, the second indication information indicates a second additional DMRS position on which the network device transmits data on a second PDSCH, and the second additional DMRS position belongs to one of the M groups of additional DMRS positions, or the second additional DMRS position is predefined, where the first additional DMRS position and the second additional DMRS position are in a same orthogonal frequency division multiplexing OFDM symbol.

The second DCI sent by the network device to the second terminal device may include the second indication information that indicates the second additional DMRS position on which the network device transmits the data on the second PDSCH. The second additional DMRS position may belong to one of the M groups configured by the network device for the terminal device, or the second additional DMRS position may be predefined.

That the second additional DMRS position may alternatively be predefined may be understood as that the second additional DMRS is defined in a protocol. When the second additional DMRS is defined in the protocol, the terminal device and the network device may learn of the second additional DMRS position without sending messages to each other.

In this embodiment of this application, the first additional DMRS position and the second additional DMRS position are in a same orthogonal frequency division multiplexing OFDM symbol. That is, a first additional DMRS and a second additional DMRS are orthogonal.

For example, with reference to FIG. 8, the first additional DMRS position may be the second configuration of the terminal device 1, to be specific, an additional DMRS is located in the OFDM symbol 6 and the OFDM symbol 9. The second additional DMRS position may be the first configuration of the terminal device 2, and the additional DMRS position is also located in the OFDM symbol 6 and the OFDM symbol 9. In this case, the network device can ensure orthogonality of DMRSs of the terminal device 1 and the terminal device 2 by selecting different antenna ports.

Optionally, the first additional DMRS position and/or the second additional DMRS position is a unified configuration for all terminal devices in a cell.

For example, with reference to FIG. 9, the first additional DMRS position and the second additional DMRS position may be a unified configuration for all terminal devices in a cell.

Optionally, when the second additional DMRS position belongs to one of the M groups of additional DMRS positions, the second additional DMRS position is sent by the network device to the second terminal device through a system message or separate configuration information.

For example, the system message may be a SIB, for example, a SIB 1 or a SIB 2. The network device may notify, through a broadcast message, all terminal devices in the cell of the first additional DMRS position.

For example, the separate configuration information may be DMRS-downlink configuration information. The network device notifies the terminal device of the first additional DMRS position by sending the DMRS-downlink configuration information.

Optionally, the second indication information is carried in a field that is of the second DCI and that indicates a DMRS antenna port.

Optionally, a first domain in the field that indicates the DMRS antenna port indicates the DMRS antenna port, a second domain in the field that indicates the DMRS antenna port indicates the second additional DMRS position, and an intersection set of the first domain and the second domain is empty.

It should be understood that the intersection set of the first domain and the second domain is empty may be understood as that the first domain and the second domain do not overlap. For example, the first domain is three bits in the field that indicates the DMRS antenna port, and the second domain is one bit that is other than the first domain and that is in the field that indicates the DMRS antenna port.

Based on the foregoing embodiments, and based on this embodiment of this application, the network device configures a plurality of groups of additional DMRS positions for the first terminal device in the bandwidth part. In this technical solution, a probability that DMRSs of terminal devices are orthogonal during pairing can be increased, and a combination range of paired terminal devices can be increased. Further, the network device may indicate, in the DCI, additional DMRS positions that are used by paired terminal devices, to ensure that DMRSs of the paired terminal devices are orthogonal.

FIG. 11 is a schematic flowchart of another DMRS orthogonalization method according to an embodiment of this application. As shown in FIG. 11, the method may include step 410 to step 430.

410. Configure N groups of additional DMRS positions for a first terminal device in a first bandwidth part, where N is a positive integer greater than or equal to 2.

It should be understood that, for step 410, refer to related descriptions of step 310. For brevity, details are not described again.

420. Send first DCI to the first terminal device, where the first DCI includes first indication information, the first indication information indicates a first additional DMRS position on which the first terminal device transmits data on a first physical uplink shared channel PUSCH, and the first additional DMRS position belongs to one of the N groups of additional DMRS positions, or the first additional DMRS position is predefined.

It should be understood that, for step 420, refer to related descriptions of step 320. For brevity, details are not described again.

430. The first terminal device transmits a first additional DMRS based on the first indication information.

The first terminal device transmits the first additional DMRS on the PUSCH channel based on the first additional DMRS position that is indicated in the first indication information in the DCI.

Optionally, the method may further include step 440 and step 450.

440. Configure M groups of additional DMRS positions for a second terminal device in the first bandwidth part, where M is a positive integer greater than or equal to 2.

450. Send second DCI to the second terminal device, where the second DCI includes second indication information, the second indication information indicates a second additional DMRS position on which the second terminal device transmits data on a second PUSCH, and the second additional DMRS position belongs to one of the N groups of additional DMRS positions, or the second additional DMRS position is predefined, where the first additional DMRS position and the second additional DMRS position are in a same orthogonal frequency division multiplexing OFDM symbol.

Optionally, the first additional DMRS position is a unified configuration for all terminal devices in a cell, and/or the second additional DMRS position is a unified configuration for all terminal devices in a cell.

Optionally, when the first additional DMRS position belongs to one of the N groups of additional DMRS positions, the first additional DMRS position is sent by a network device to the first terminal device through a system message or separate configuration information.

Optionally, the first indication information is carried in a field that is of the first DCI and that indicates a DMRS antenna port.

Optionally, a first domain in the field that indicates the DMRS antenna port indicates the DMRS antenna port, a second domain in the field that indicates the DMRS antenna port indicates the first additional DMRS position, and an intersection set of the first domain and the second domain is empty.

It should be understood that this embodiment is described by using uplink MU-MIMO as an example. For specific details, refer to related descriptions of downlink MU-MIMO in FIG. 10. For brevity, details are not described again.

Embodiments of this application further provide a DMRS orthogonalization method. The method may include: configuring a third additional DMRS position for a first terminal device in a first bandwidth part; sending third downlink control information DCI to the first terminal device, where the third DCI includes third indication information, the third indication information indicates a first target additional DMRS position on which a network device transmits data on a third PDSCH or the first terminal device transmits data on a third PUSCH, and the first target additional DMRS position is the third additional DMRS position, or the first target additional DMRS position is predefined.

That the first target additional DMRS position is predefined may be understood as that the target additional DMRS position is defined in a protocol. It should be understood that the predefined additional DMRS position may be a unified configuration for all terminal devices in a cell.

Based on this embodiment of this application, the network device configures one group of additional DMRS positions for the terminal device, and another group of additional DMRS positions is predefined in a protocol. The network device may indicate, in the DCI that is sent to the terminal device, that the network device or the terminal device uses the configured third additional DMRS position or the predefined additional DMRS position.

Optionally, the target additional DMRS position belongs to one of a plurality of groups of predefined additional DMRSs.

Optionally, a fourth additional DMRS position is configured for a second terminal device in the first bandwidth part. Fourth DCI is sent to the second terminal device, where the fourth DCI includes fourth indication information. The fourth indication information indicates a second target additional DMRS position on which the network device transmits data on a fourth PDSCH or the second terminal device transmits data on a fourth PUSCH. The second target additional DMRS position is the fourth additional DMRS position, or the second target additional DMRS position is predefined.

The first target additional DMRS position and the second target additional DMRS position are in a same orthogonal frequency division multiplexing OFDM symbol.

Optionally, the first target additional DMRS position is a unified configuration for all terminal devices in a cell. Alternatively, the second target additional DMRS position is a unified configuration for all terminal devices in a cell.

Optionally, the third indication information is carried in a field that is of the DCI and that indicates a DMRS antenna port, or the fourth indication information is carried in a field that is of the DCI and that indicates a DMRS antenna port.

Optionally, a first domain in the field that indicates the DMRS antenna port indicates the DMRS antenna port, a second domain in the field that indicates the DMRS antenna port indicates the first target additional DMRS position or the second target additional DMRS position, and an intersection set of the first domain and the second domain is empty.

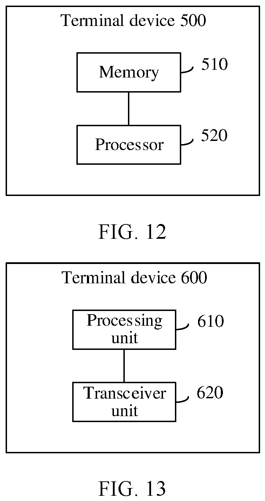

FIG. 12 is a schematic diagram of a structure of a terminal device according to an embodiment of this application. As shown in FIG. 12, the terminal device 500 may include a memory 510 and a processor 520.

The memory 510 is configured to store instructions. The processor 520 is configured to read the instructions. When the instructions are executed by the processor 520, the terminal device 500 is enabled to perform the following steps.

First downlink control information DCI is received. The first DCI includes first indication information. The first indication information indicates a first additional DMRS position. The first additional DMRS position belongs to one of N groups of additional DMRS positions, where the N groups of additional DMRS positions are configured by a network device for the terminal device in a first bandwidth part, or the first additional DMRS position is predefined, and N is a positive integer greater than or equal to 2.

When the first additional DMRS position is used by the network device to transmit data on a first PDSCH, the terminal device performs channel estimation on the first PDSCH based on the first indication information.

Alternatively, when the first additional DMRS position is used by the terminal device to transmit data on a second PUSCH, the terminal device transmits a first additional DMRS based on the first indication information.

Optionally, the first additional DMRS position and a second additional DMRS position are in a same OFDM symbol. The second additional DMRS position is indicated by second indication information in second DCI received by another terminal device. The second additional DMRS position belongs to one of M groups of additional DMRS positions, or the second additional DMRS position is predefined, where M is a positive integer greater than or equal to 2.

When the second additional DMRS position is used by the network device to transmit data on a second PDSCH, the another terminal device performs channel estimation on the second PDSCH based on the second indication information.

Alternatively, when the second additional DMRS position is used by the another terminal device to transmit data on a second PUSCH, the another terminal device transmits a second additional DMRS based on the second indication information.

Optionally, the first additional DMRS position is a unified configuration for all terminal devices in a cell, and/or the second additional DMRS position is a unified configuration for all terminal devices in a cell.

Optionally, when the first additional DMRS position belongs to one of the N groups of additional DMRS positions, the first additional DMRS position is sent by the network device to the terminal device through a system message or separate configuration information.

Optionally, the first indication information is carried in a field that is of the first DCI and that indicates a DMRS antenna port.

Optionally, a first domain in the field that indicates the DMRS antenna port indicates the DMRS antenna port, a second domain in the field that indicates the DMRS antenna port indicates the first additional DMRS position, and an intersection set of the first domain and the second domain is empty.

FIG. 13 is a schematic block diagram of another terminal device according to an embodiment of this application. As shown in FIG. 13, the terminal device 600 may include a processing unit 610 and a transceiver unit 620.

The processing unit 610 may be a processor (which may include one or more processors), a processing circuit having a processor function, or the like, and may be configured to perform another step that is other than sending and receiving and that is of the terminal device in the foregoing method embodiments.

The transceiver unit 620 may be a transceiver (including a transmitter and/or a receiver), an input/output interface (including an input interface and/or an output interface), a pin, a circuit, or the like. The transceiver unit 620 may be configured to perform steps of sending and receiving of the terminal device in the foregoing method embodiments.

It should be understood that, for related beneficial technical effects in this embodiment of this application, refer to related descriptions in the foregoing embodiments. Details are not described again.

An embodiment of this application further provides a network device, including a processor. The processor is coupled to a memory. The memory is configured to store a program or instructions. When the program or the instructions are executed by the processor, the network device is enabled to perform the DMRS orthogonalization method according to any one of the foregoing implementations.

An embodiment of this application further provides a network device, including a transceiver unit and a processing unit. The transceiver unit may be configured to perform steps of sending and receiving of the network device in the foregoing method embodiments. The processing unit may be configured to perform another step that is other than sending and receiving and that is of the network device in the foregoing method embodiments.

An embodiment of this application further provides a computer-readable storage medium. The computer-readable storage medium stores a computer program or instructions. When the computer program or the instructions are executed, a computer is enabled to perform the DMRS orthogonalization method according to any one of the foregoing implementations.

An embodiment of this application further provides a computer program product. The computer program product includes computer program code. When the computer program code is run on a computer, the computer is enabled to perform the method that is performed by the foregoing network device.

An embodiment of this application further provides a computer program product. The computer program product includes computer program code. When the computer program code is run on a computer, the computer is enabled to perform the method that is performed by the foregoing terminal device.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), the field programmable gate array (field programmable gate array, FPGA), another programmable logic device, a discrete gate, a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A demodulation reference signal DMRS orthogonalization method, comprising:

    configuring N groups of additional DMRS positions for a first terminal device in a first bandwidth part, wherein N is a positive integer greater than or equal to 2; and
    sending first downlink control information DCI to the first terminal device, wherein the first DCI comprises first indication information, the first indication information indicates a first additional DMRS position on which a network device transmits data on a first physical downlink shared channel PDSCH or the first terminal device transmits data on a first physical uplink shared channel PUSCH, and the first additional DMRS position belongs to one of the N groups of additional DMRS positions, or the first additional DMRS position is predefined.

2.  The method according to claim 1, wherein the method further comprises:

    configuring M groups of additional DMRS positions for a second terminal device in the first bandwidth part, wherein M is a positive integer greater than or equal to 2; and
    sending second DCI to the second terminal device, wherein the second DCI comprises second indication information, the second indication information indicates a second additional DMRS position on which the network device transmits data on a second PDSCH or the second terminal device transmits data on a second PUSCH, and the second additional DMRS position belongs to one of the N groups of additional DMRS positions, or the second additional DMRS position is predefined, wherein
    the first additional DMRS position and the second additional DMRS position are in a same orthogonal frequency division multiplexing OFDM symbol.

3.  The method according to claim 2, wherein the first additional DMRS position is a unified configuration for all terminal devices in a cell; and/or the second additional DMRS position is a unified configuration for all terminal devices in a cell.

**4.** The method according to claim 3, wherein when the first additional DMRS position belongs to one of the N groups of additional DMRS positions, the first additional DMRS position is sent by the network device to the first terminal device through a system message or separate configuration information.

**5.** The method according to any one of claims 1 to 4, wherein the first indication information is carried in a field that belongs to the DCI and that indicates a DMRS antenna port.

**6.** The method according to claim 5, wherein a first domain in the field that indicates the DMRS antenna port indicates the DMRS antenna port, a second domain in the field that indicates the DMRS antenna port indicates the first additional DMRS position, and an intersection set of the first domain and the second domain is empty.

**7.** A DMRS orthogonalization method, comprising:

receiving, by a first terminal device, first DCI, wherein the first DCI comprises first indication information, the first indication information indicates a first additional DMRS position, the first additional DMRS position belongs to one of N groups of additional DMRS positions, and the N groups of additional DMRS positions are configured by a network device for the first terminal device in a first bandwidth part, or the first additional DMRS position is predefined, wherein N is a positive integer greater than or equal to 2; and
when the first additional DMRS position is used by the network device to transmit data on a first PDSCH, performing, by the first terminal device, channel estimation on the first PDSCH based on the first indication information; or
when the first additional DMRS position is used by the first terminal device to transmit data on a first PUSCH, transmitting, by the first terminal device, a first additional DMRS based on the first indication information.

**8.** The method according to claim 7, wherein the method further comprises:

receiving, by a second terminal device, second DCI, wherein the second DCI comprises second indication information, the second indication information indicates a second additional DMRS position, and the second additional DMRS position belongs to one of M groups of additional DMRS positions, or the second additional DMRS position is predefined, wherein M is a positive integer greater than or equal to 2; and
when the second additional DMRS position is used by the network device to transmit data on a second PDSCH, performing, by the second terminal device, channel estimation on the second PDSCH based on the second indication information; or
when the second additional DMRS position is used by the second terminal device to transmit data on a second PUSCH, transmitting, by the second terminal device, a second additional DMRS based on the second indication information, wherein
the first additional DMRS position and the second additional DMRS position are in a same orthogonal frequency division multiplexing OFDM symbol.

**9.** The method according to claim 7 or 8, wherein the first additional DMRS position is a unified configuration for all terminal devices in a cell; and/or the second additional DMRS position is a unified configuration for all terminal devices in a cell.

**10.** The method according to claim 9, wherein when the first additional DMRS position belongs to one of the N groups of additional DMRS positions, the first additional DMRS position is sent by the network device to the first terminal device through a system message or separate configuration information.

**11.** The method according to any one of claims 7 to 10, wherein the first indication information is carried in a field that belongs to the DCI and that indicates a DMRS antenna port.

**12.** The method according to claim 11, wherein a first domain in the field that indicates the DMRS antenna port indicates the DMRS antenna port, a second domain in the field that indicates the DMRS antenna port indicates the first additional DMRS position, and an intersection set of the first domain and the second domain is empty.

**13.** A terminal device, comprising:

a memory, configured to store instructions; and
a processor, configured to read the instructions, wherein when the instructions are executed by the processor, the terminal device is enabled to perform the following steps:

receiving first DCI, wherein the first DCI comprises first indication information, the first indication information indicates a first additional DMRS position, the first additional DMRS position belongs to one of N groups of additional DMRS positions, and the N groups of additional DMRS positions are configured by a network device for the terminal device in a first bandwidth part, wherein N is a positive integer greater than or equal to 2, or the first additional DMRS position is predefined; and

when the first additional DMRS position is used by the network device to transmit data on a first PDSCH, performing, by the terminal device, channel estimation on the first PDSCH based on the first indication information; or

when the first additional DMRS position is used by the terminal device to transmit data on a first PUSCH, transmitting, by the terminal device, a first additional DMRS based on the first indication information.

14. The terminal device according to claim 13, wherein the first additional DMRS position and a second additional DMRS position are in a same OFDM symbol, wherein the second additional DMRS position is indicated by second indication information in second DCI received by another terminal device, the second additional DMRS position belongs to one of M groups of additional DMRS positions, or the second additional DMRS position is predefined, and M is a positive integer greater than or equal to 2; and

when the second additional DMRS position is used by the network device to transmit data on a second PDSCH, the another terminal device performs channel estimation on the second PDSCH based on the second indication information; or

when the second additional DMRS position is used by the another terminal device to transmit data on a second PUSCH, the another terminal device transmits a second additional DMRS based on the second indication information.

15. The terminal device according to claim 14, wherein the first additional DMRS position is a unified configuration for all terminal devices in a cell; and/or the second additional DMRS position is a unified configuration for all terminal devices in a cell.

16. The terminal device according to claim 15, wherein when the first additional DMRS position belongs to one of the N groups of additional DMRS positions, the first additional DMRS position is sent by the network device to the terminal device through a system message or separate configuration information.

17. The terminal device according to any one of claims 13 to 16, wherein the first indication information is carried in a field that belongs to the first DCI and that indicates a DMRS antenna port.

18. The terminal device according to claim 17, wherein a first domain in the field that indicates the DMRS antenna port indicates the DMRS antenna port, a second domain in the field that indicates the DMRS antenna port indicates the first additional DMRS position, and an intersection set of the first domain and the second domain is empty.

19. A network device, comprising a processor, wherein the processor is coupled to a memory, the memory is configured to store a program or instructions, and when the program or the instructions are executed by the processor, the network device is enabled to perform the method according to any one of claims 1 to 6.

20. A computer-readable storage medium, wherein the computer-readable storage medium stores a computer program or instructions, and when the computer program or the instructions are executed, a computer is enabled to perform the method according to any one of claims 1 to 6 or claims 7 to 12.

21. A computer program product, wherein the computer program product comprises computer program code, and when the computer program code is run on a computer, the computer is enabled to perform the method according to any one of claims 1 to 6 or claims 7 to 12.

22. A chip, wherein the chip is coupled to a memory, and is configured to read and execute program instructions stored in the memory, to implement the method according to any one of claims 1 to 6 or claims 7 to 12.

|    | 0 | 1 | 2 | 3 | 4 | 5 | 6 | 7 | 8 | 9 | 10 | 11 | 12 | 13 |
|----|---|---|---|---|---|---|---|---|---|---|----|----|----|----|

FIG. 1

DMRS

No data

Data

FIG. 2

(a)

DMRS          Data

No data

(b)

FIG. 3

(a)

(b)

FIG. 4

FIG. 5

(a)

DMRS     Data

No data

(b)

FIG. 6

TO
FIG. 7B

FIG. 7A

EP 4 297 319 A1

CONT.
FROM
FIG. 7A

210

FIG. 7B

28

First configuration of an additional DMRS
position of a terminal device 1

Second configuration of the additional
DMRS position of the terminal device 1

First configuration of an additional DMRS
position of a terminal device 2

Second configuration of the additional DMRS
position of the terminal device 2

DMRS                    Data

No data

FIG. 8

EP 4 297 319 A1

FIG. 9

| Network device | | First terminal device |
|---|---|---|

310. Configure N groups of additional DMRS positions for a first terminal device in a first bandwidth part, where N is a positive integer greater than or equal to 2

320. First DCI, including first indication information →

330. Perform channel estimation on first PDSCH based on the first indication information

**FIG. 10**

| Network device | | Terminal device |
|---|---|---|

410. Configure N groups of additional DMRS positions for a first terminal device in a first bandwidth part, where N is a positive integer greater than or equal to 2

420. First DCI, including first indication information →

430. Transmit a first additional DMRS based on the first indication information

**FIG. 11**

Terminal device 500

| Memory | 510 |

| Processor | 520 |

FIG. 12

Terminal device 600

| Processing unit | 610 |

| Transceiver unit | 620 |

FIG. 13

## INTERNATIONAL SEARCH REPORT

| | International application No. |
|---|---|
| | **PCT/CN2022/078570** |

**A. CLASSIFICATION OF SUBJECT MATTER**

H04L 5/00(2006.01)i; H04W 72/04(2009.01)i

According to International Patent Classification (IPC) or to both national classification and IPC

**B. FIELDS SEARCHED**

Minimum documentation searched (classification system followed by classification symbols)

H04L H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: DMRS 正交 组 附加 扩展 配对 端口 指示 位置 additional DCI MU MIMO indicat + pair+ position port+ orthogonal

**C. DOCUMENTS CONSIDERED TO BE RELEVANT**

| Category* | Citation of document, with indication, where appropriate, of the relevant passages | Relevant to claim No. |
|---|---|---|
| X | CN 110574326 A (SAMSUNG ELECTRONICS CO., LTD.) 13 December 2019 (2019-12-13) description paragraphs [0095]-[0143], claim 3, figures 6A-6C | 1-22 |
| A | CN 110035527 A (HUAWEI TECHNOLOGIES CO., LTD.) 19 July 2019 (2019-07-19) entire document | 1-22 |
| A | US 2020382354 A1 (INTEL CORPORATION) 03 December 2020 (2020-12-03) entire document | 1-22 |
| A | CN 109274471 A (HUAWEI TECHNOLOGIES CO., LTD.) 25 January 2019 (2019-01-25) entire document | 1-22 |
| A | VIVO. "Remaining details on DMRS design" *3GPP TSG RAN WG1 Meeting AH 1801 R1-1800190*, 26 January 2018 (2018-01-26), entire document | 1-22 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 April 2022** | **28 April 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 297 319 A1**

| International application No. |
|---|
| **PCT/CN2022/078570** |

| Patent document cited in search report | | | Publication date (day/month/year) | Patent family member(s) | | | Publication date (day/month/year) |
|---|---|---|---|---|---|---|---|
| CN | 110574326 | A | 13 December 2019 | EP | 3952198 | A1 | 09 February 2022 |
| | | | | US | 2020274747 | A1 | 27 August 2020 |
| | | | | US | 2022006680 | A1 | 06 January 2022 |
| | | | | EP | 3580884 | A1 | 18 December 2019 |
| | | | | KR | 20210130122 | A | 29 October 2021 |
| | | | | US | 2018316534 | A1 | 01 November 2018 |
| | | | | WO | 2018199635 | A1 | 01 November 2018 |
| | | | | KR | 20180119927 | A | 05 November 2018 |
| CN | 110035527 | A | 19 July 2019 | US | 2019386801 | A1 | 19 December 2019 |
| | | | | CN | 110351857 | A | 18 October 2019 |
| | | | | JP | 2021177624 | A | 11 November 2021 |
| | | | | EP | 3589052 | A1 | 01 January 2020 |
| | | | | WO | 2019137057 | A1 | 18 July 2019 |
| | | | | PL | 3589052 | T3 | 29 November 2021 |
| | | | | CN | 110336653 | A | 15 October 2019 |
| | | | | JP | 2020527874 | A | 10 September 2020 |
| | | | | ES | 2882604 | T3 | 02 December 2021 |
| | | | | BR | 112019027399 | A2 | 01 September 2020 |
| | | | | EP | 3876641 | A2 | 08 September 2021 |
| US | 2020382354 | A1 | 03 December 2020 | None | | | |
| CN | 109274471 | A | 25 January 2019 | CA | 3054325 | A1 | 24 January 2019 |
| | | | | US | 2021021300 | A1 | 21 January 2021 |
| | | | | BR | 112019020873 | A2 | 28 April 2020 |
| | | | | EP | 3576334 | A1 | 04 December 2019 |
| | | | | JP | 2020516128 | A | 28 May 2020 |
| | | | | KR | 20190112806 | A | 07 October 2019 |
| | | | | US | 2019349023 | A1 | 14 November 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110251906

- CN 202110389241X